(19)

Europäisches
Patentamt
European
Patent Office
Office européen
des brevets

(11) **EP 4 687 266 A1**

(12) **EUROPEAN PATENT APPLICATION**

(43) Date of publication:
**04.02.2026  Bulletin 2026/06**

(21) Application number: **25193140.8**

(22) Date of filing: **31.07.2025**

(51) International Patent Classification (IPC):
*H02J 50/20* (2016.01)       *H02J 50/40* (2016.01)
*H02J 50/80* (2016.01)       *H02J 50/00* (2016.01)
*H04W 4/70* (2018.01)       *H04W 52/02* (2009.01)

(52) Cooperative Patent Classification (CPC):
**H02J 50/001; H02J 50/20; H02J 50/40;
H02J 50/80; H04W 4/70; H04W 52/0216;
H04W 52/0229; H04W 52/0261**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.07.2024  KR 20240102183
21.07.2025  KR 20250098187**

(71) Applicant: **KT Corporation
Seongnam-si, Gyeonggi-do 13606 (KR)**

(72) Inventors:
• **KIM, Han Jun
  13606 Seongnam-si Gyeonggi-do (KR)**
• **PARK, Kyujin
  13606 Gyeonggi-do (KR)**

(74) Representative: **Santarelli
Tour Trinity
1 bis Place de la Défense
92400 Courbevoie (FR)**

(54) **METHOD AND APPARATUS FOR PERFORMING ENERGY HARVESTING**

(57)     Provided is a method for an Ambient Internet of things (IoT) device to perform energy harvesting. The method may include receiving, from a carrier wave node (CW node), configuration information for receiving a carrier wave and receiving the carrier wave from the CW node based on the configuration information to perform energy harvesting.

*FIG.1*

**Description**

**CROSS-REFERENCE TO RELATED APPLICATION**

This application claims priority from Korean Patent Application Nos. 10-2024-0102183, filed on July 31, 2024, and 10-2025-0098187, filed on July 21, 2025, which are hereby incorporated by reference for all purposes as if fully set forth herein.

**BACKGROUND**

**Field**

The disclosure relates to a method and device for performing energy harvesting in a next-generation radio access network (which means "5G", "New Radio (NR)", "5G-advanced", "6G" or post-6G 3GPP radio access network in the disclosure).

**Description of Related Art**

In recent years, the Internet of things (IoT) has attracted significant attention in the field of wireless communication. An increasing number of objects are expected to be interconnected to enhance productivity and efficiency and enhance comfort in life. Further reducing the size, complexity, and power consumption of IoT devices enables the deployment of tens or even hundreds of billions of IoT devices for various applications and may provide added value across the entire value chain. Powering all IoT devices with a battery is impractical, and batteries should be manually replaced or recharged, which may result in high maintenance costs, serious environmental problems, and even safety risks for some use cases.
In this regard, efficient power consumption of IoT devices is required. Accordingly, a specific design is needed for a method to more efficiently manage the energy consumption of IoT devices.

**BRIEF SUMMARY**

The disclosure may provide a method and device for performing energy harvesting.
In one aspect, a method may be provided for an Ambient Internet of things (IoT) device to perform energy harvesting. The method may include receiving, from a carrier wave node (CW node), configuration information for reception of a carrier wave and receiving the carrier wave from the CW node based on the configuration information to perform energy harvesting.
In another aspect, the present embodiments may provide a method for a carrier wave node (CW node) to control energy harvesting of an Ambient Internet of things (IoT) device, comprising transmitting configuration information for transmission of a carrier wave to the Ambient IoT device and transmitting the carrier wave to the Ambient IoT device based on the configuration information.
In yet another aspect, an Ambient Internet of things (IoT) device may be provided for performing energy harvesting. The Ambient IoT may include a transmitter, a receiver, and a controller controlling an operation of the transmitter and the receiver, wherein the controller receives, from a carrier wave node (CW node), configuration information for reception of a carrier wave, and receives the carrier wave from the CW node based on the configuration information to perform energy harvesting.
In yet another aspect, a carrier wave node (CW node) may be provided for controlling energy harvesting of an Ambient Internet of things (IoT) device. The CW node may include a transmitter, a receiver, and a controller controlling an operation of the transmitter and the receiver, wherein the controller transmits configuration information for transmission of a carrier wave to the Ambient IoT device, and transmits the carrier wave to the Ambient IoT device based on the configuration information.
According to the embodiments, there may be provided a method and device for performing energy harvesting.
Further, seamless communication may be provided by reducing a discharge probability based on periodic carrier wave reception of an Ambient IoT device supporting energy harvesting that operates with low power.

**DESCRIPTION OF DRAWINGS**

The above and other objects, features, and advantages of the disclosure will be more clearly understood from the following detailed description, taken in conjunction with the accompanying drawings, in which:

FIG. 1 is a view schematically illustrating a structure for an NR wireless communication system;

FIG. 2 is a view illustrating a frame structure in an NR system;

FIG. 3 is a view illustrating a resource grid supported by radio access technology;

FIG. 4 is a view illustrating a bandwidth part supported by radio access technology;

FIG. 5 is a view exemplarily illustrating a synchronization signal block in radio access technology;

FIG. 6 is a view illustrating a random access procedure in radio access technology;

FIG. 7 is a view illustrating a CORESET;

FIG. 8 is a view illustrating RFID reader/tag operations and tag state;

FIGS. 9 to 13 are views illustrating connectivity topology for an Ambient IoT network and device;

FIG. 14 is a flowchart illustrating a procedure for an Ambient IoT device to perform energy harvesting according to an embodiment;

FIG. 15 is a flowchart illustrating a procedure for a carrier wave node to control energy harvesting of an Ambient IoT device according to an embodiment;

FIGS. 16 to 18 are views illustrating Ambient IoT topology scenarios according to an embodiment;

FIG. 19 is a view illustrating a configuration of a carrier wave according to an embodiment;

FIG. 20 is a block diagram illustrating a UE according to an embodiment; and

FIG. 21 is a block diagram illustrating a carrier wave node according to an embodiment.

## DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

<Overview of NR System>

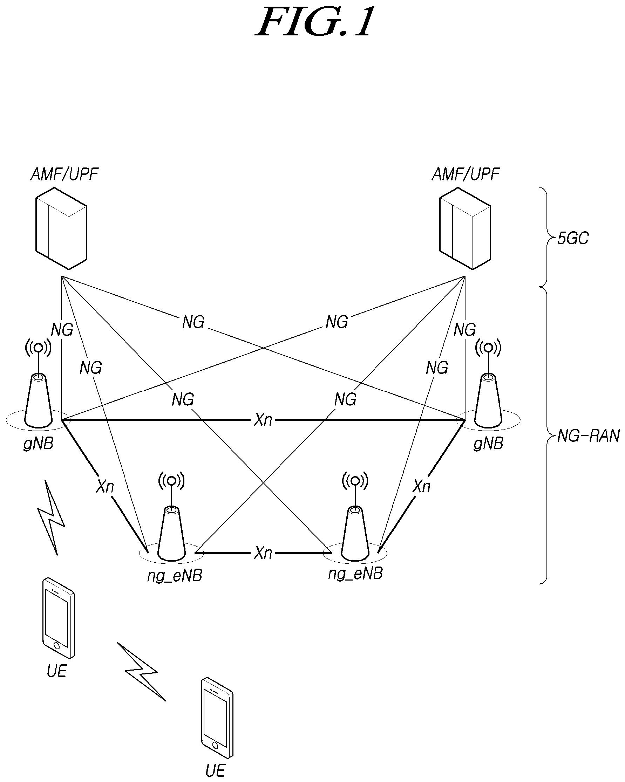

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

<NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "$\mu$" is used as an exponential value of 2 so as to be changed exponentially on the basis of 15 kHz.

[Table 1]

| $\mu$ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

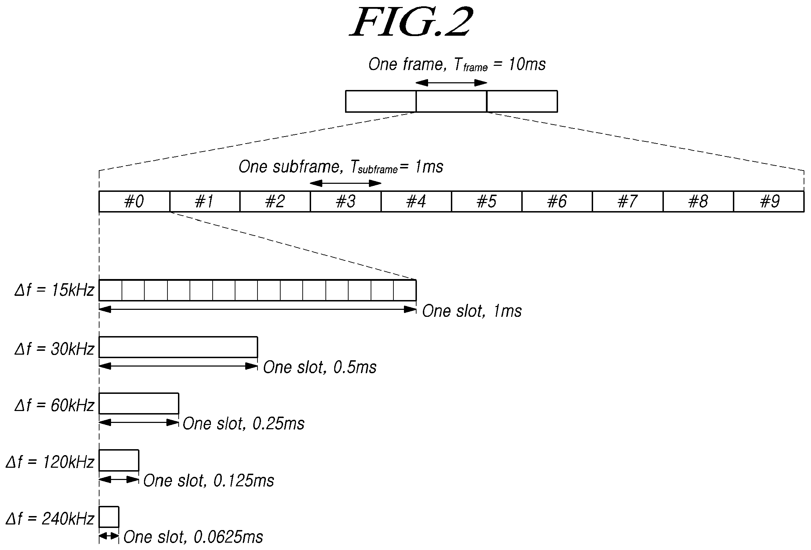

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

<Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

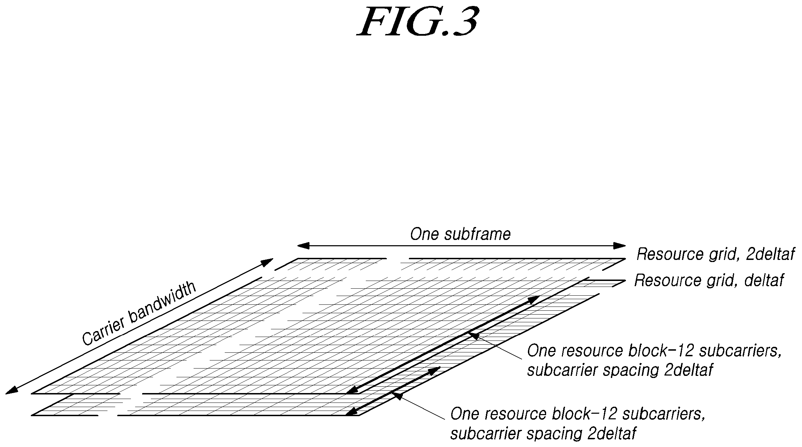

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

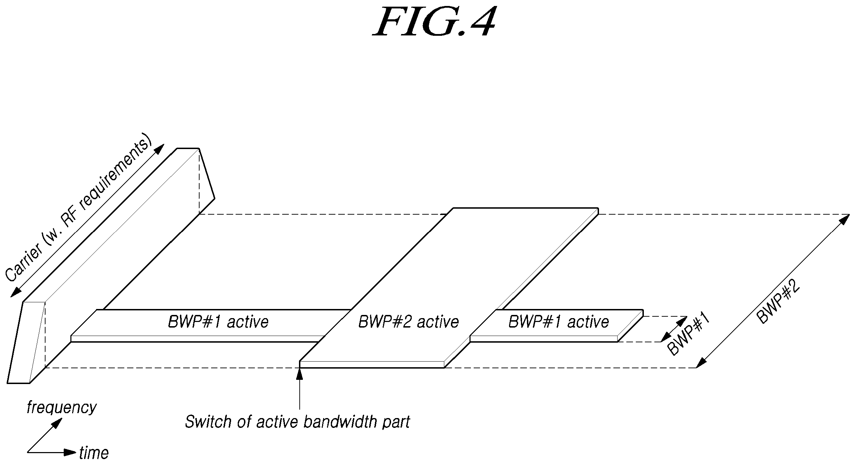

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency retuning between a downlink operation and an uplink operation, the downlink bandwidth part and the uplink bandwidth part are configured in pairs to share a center frequency.

<Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

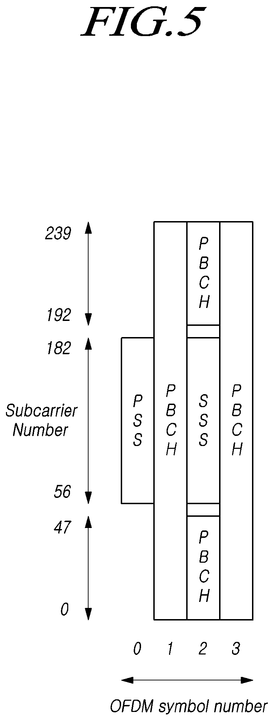

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

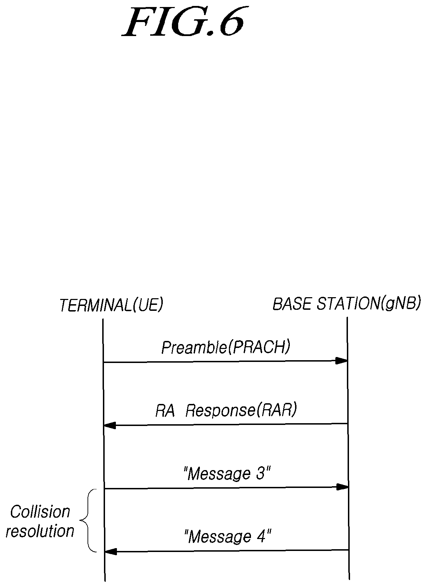

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

<NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

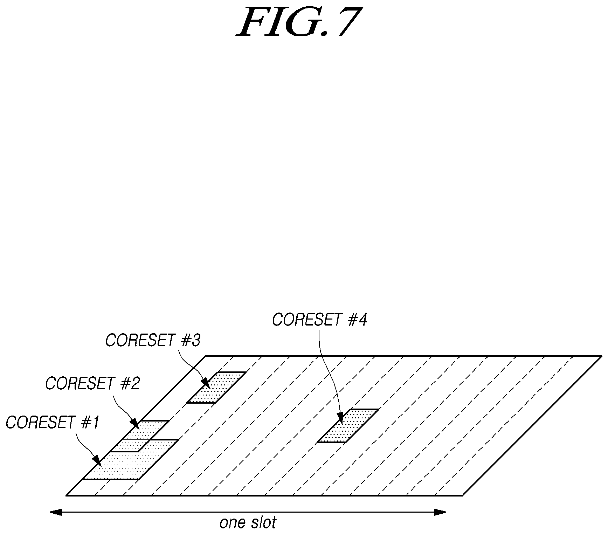

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method for performing energy harvesting is described with reference to related drawings.

The disclosure proposes a signal configuration and transmission method for a base station to periodically transmit an energy harvesting-dedicated carrier wave to an Ambient IoT device for battery management and discharge prevention of the Ambient IoT device (referred to as Ambient IoT or A-IoT in the disclosure) in a 3rd generation partnership project (3GPP) radio access network (hereinafter referred to as "5G" or "New Radio (NR)" in the disclosure) or a next-generation radio access network (hereinafter referred to as "5G-Advanced or 6G" in the disclosure).

In recent years, IoT technology has attracted attention in wireless communication. IoT technology has been developed to connect an increasing number of objects to each other to enhance industrial productivity and improve quality of life. NB-IoT and eMTC technologies are examples. However, to build a more effective IoT ecosystem, enhancements are needed from various perspectives such as size, form factor, price, complexity, power consumption, and coverage of IoT terminals.

Radio Frequency Identification (RFID) is a representative technology service of IoT. The advantage of RFID is that it has very low complexity, and an RFID tag has a very small form factor. However, the reading distance of RFID is only a few meters, supporting very narrow coverage, and it is labor-intensive due to handheld scanning, and deployment requires significant cost due to the installation cost of RFID portals/gates. Therefore, RFID has limitations in supporting seamless service and coverage in a large-scale network.

To satisfy these requirements, research on Ambient IoT technology has been conducted. An Ambient IoT device has a lower form factor compared to legacy IoT terminals and supports energy harvesting based on battery-less and minimal energy storage capability, enabling operation without charging or with minimal power charging. Further, research is being conducted to support wider coverage based on higher power efficiency and to utilize an RF signal supported by legacy networks.

The disclosure proposes a method for providing seamless communication service between an Ambient IoT device and a base station/reader by a base station or reader transmitting an energy harvesting-dedicated carrier wave to an Ambient IoT device that supports energy harvesting periodically or semi-persistently like a cell-specific or device-specific CSI-RS to reduce battery discharge and outage probability of the Ambient IoT device supporting energy harvesting.

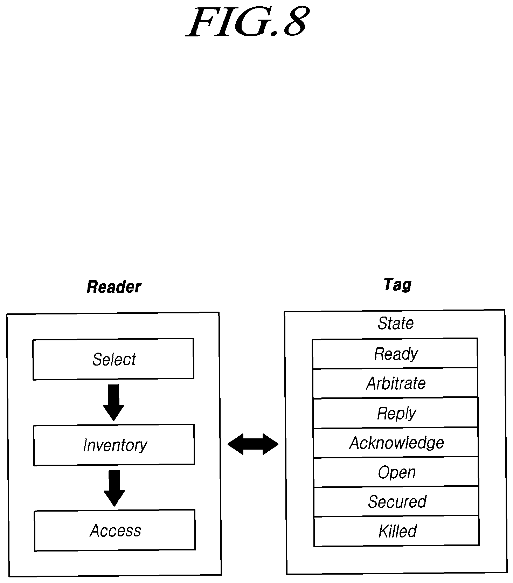

RFID technology, which is the foundation of Ambient IoT technology, is defined in the "TM Radio-Frequency Identity Protocols Generation-2 UHF RFID" document. The document defines a protocol between a Reader and a Tag, and as illustrated in FIG. 8, there are three main operations: "Select, Inventory, Access."

A Select operation is an operation in which a Reader selects one or more tag populations, and is constituted of "Select" and "Challenge" commands. In this case, a Tag enters a Ready state. The Select command is a mandatory operation, and the Challenge command is optional. The Select command allows a Reader to select a set of Tags based on user-defined criteria. An Inventory operation is an operation in which a Reader identifies/detects each Tag and generates a unique random number based on command/response with each Tag to prepare for Access. An Access operation is where a Reader performs mutual communication with each Tag to perform procedures such as Read/Write/Authenticate.

As described above, in recent years, IoT has attracted significant attention in the field of wireless communication. More "things" are expected to be interconnected to enhance productivity efficiency and enhance comfort in life. Further reducing the size, complexity, and power consumption of IoT devices enables the deployment of tens or even hundreds of billions of IoT devices for various applications and may provide added value across the entire value chain. Powering all IoT devices with a battery is impractical, and batteries should be manually replaced or recharged, which may result in high maintenance costs, serious environmental problems, and even safety risks for some use cases (e.g., wireless sensors in the power and oil industry).

Most legacy wireless communication devices are powered by a battery that need to be manually replaced or recharged. Automation and digitalization of various industries are opening a new market that requires a new IoT technology supporting an energy storage device that has no energy storage capability or does not need to be manually replaced or recharged. The form factor of such a device should be appropriately small to convey the effectiveness of a target use case.

The goal is to capture use cases, traffic scenarios, and device constraints of Ambient power-based IoT and identify new potential service requirements. A case where a device operates without a battery or has limited energy storage capability (e.g., using a capacitor) is being considered, and energy is supplied by collecting via radio waves, light, movement, heat, or other power sources that may be suitable.

Considering the size and complexity required for practical applications with a device having no energy storage capability or limited energy storage capability that eliminates the need for manual battery replacement or recharging, the output power of an energy harvester is typically between $1 \mu W$ and several hundred $\mu W$. Existing cellular devices may not work well with energy harvesting because peak power consumption is 10mW or more.

One type of application example is asset identification, where most industries currently rely primarily on barcodes and RFID. The main advantage of these two technologies is ultra-low complexity and small form factor of a tag. However, the limited reading range of only a few meters typically requires handheld scanning, resulting in labor-intensive and time-consuming work, or requires the use of RFID portals/gates, resulting in costly deployment. Further, the lack of an interference management scheme causes serious interference and capacity problems between RFID readers, especially when densely deployed. RFID has difficulty supporting seamless and large-scale network deployment.

TSG RAN has completed a Rel-18 RAN level SI for Ambient IoT, which provides a framework for setting terms and scope for future discussions on Ambient IoT. This work has defined representative use cases, deployment scenarios, connectivity topology, Ambient IoT devices, design goals and required functions, conducted initial feasibility assessment, and presented recommendations for subject selection in setting the scope of future WG level studies.

Since legacy technology may not meet all requirements of target use cases, it is recommended that a new IoT technology open a new market within a 3GPP system. This new technology may have an order-of-magnitude higher connection count and/or device density than legacy 3GPP IoT technology. A new IoT technology should have an order-of-magnitude higher complexity and power consumption than legacy 3GPP LPWA technology (e.g., NB-IoT and eMTC) and should address use cases and scenarios that may not be satisfied by legacy 3GPP LPWA IoT technology.

This study aims for further evaluation at a RAN WG level for Ambient IoT, a new 3GPP IoT technology suitable for deployment in a 3GPP system. This technology is suitable for ultra-low power IoT applications based on devices with ultra-low power consumption and ultra-low complexity. The study should provide clear differentiation and should address use cases and scenarios that may not be satisfied by legacy 3GPP LPWA IoT technology (e.g., NB-IoT). This includes cases with reduced peak transmission power.

In this regard, the overall goal is to study a harmonized air interface design for Ambient IoT to enable the following devices:

~1 $\mu$W peak power consumption, having an energy storage device, initial sampling frequency offset (SFO) up to $10^X$ ppm, no DL or UL amplification within the device. UL transmission of the device is backscattered by an externally provided carrier.

Several hundred $\mu$W or less peak power consumption, having an energy storage device, initial sampling frequency offset (SFO) up to 10X ppm, having DL and/or UL amplification within the device. UL transmission of the device may be generated within the device or backscattered by an externally provided carrier.

For Topologies 1 & 2 (UE operates as an intermediate node under NW control), no RRC state, no mobility (i.e., no functionality such as cell selection/reselection), no HARQ, no ARQ.

Deployment scenario according to the table referenced in section 4.2.2 of TR 38.848

For deployment scenario 1 with topology 1, base station and coexistence characteristics: Defined as micro cell, co-site.

For deployment scenario 2 with UE as an intermediate node under network control and topology 2, base station and coexistence characteristics: Defined as macro cell, co-site, with the location of the intermediate node being indoor.

FR1 licensed spectrum (FDD).

In-band spectrum deployment for NR, guard band deployment for LTE/NR, standalone band deployment.

Traffic type: Focus on DO-DTT, DT, rUCI1 (indoor inventory) and rUC4 (indoor command).

It will evaluate whether DO-A (Device-originated autonomous) use cases may be addressed according to a harmonized air interface design and will identify which portions of the harmonized air interface design are insufficient for DO-A use cases.

Transmission from an Ambient IoT device (including backscattering when used) may occur at least in UL spectrum.

For DL and UL of Ambient IoT, frame structure, synchronization and timing, random access, numerology, bandwidth, multiple access, waveform and modulation, channel coding, downlink channel/signal aspects, uplink channel/signal aspects, scheduling and timing relationship, and study of essential characteristics for a carrier wave externally provided to an Ambient IoT device, etc. are defined. This includes interference handling at an Ambient IoT UL receiver and an NR base station. Topology 2 has no difference from topology 1 in physical layer design.

Study and determine necessary functions for a compact protocol stack and lightweight signaling procedure of Ambient IoT to enable DO-DTT and DT data transmission, and study these functions. For example, paging, random access, data transmission, and necessary radio resource control aspects are defined, including respecting limitations in a general scope, interaction with higher layers, and other considerations.

Identify impacts on necessary signals and procedures at a CN-RAN interface to enable the following. For example, paging, device context management, data transmission, etc. are defined. Identify RAN architecture aspects including whether split architecture support is needed. Identify potential solutions for locating an Ambient IoT device, which have minimal or no impact on existing specifications, such as reusing existing user location reports or delivering location information to a core network.

Study of coexistence between Ambient IoT and NR/LTE, and the study of RF requirements for Ambient IoT, where Ambient IoT BS transmission/reception, transmission/reception of an Ambient IoT device, and transmission/reception of an intermediate node (UE) are defined.

The disclosure reports on feasibility of meeting design goals for relevant use cases of a new 3GPP IoT technology based on suitable deployment scenarios in a 3GPP system based on ultra-low complexity devices for low-power IoT applications. This technology aims to address use cases and scenarios that may not be achieved by legacy 3GPP LPWA IoT technology and seeks to provide clear differentiation.

In terms of energy storage, the disclosure considers the following device characteristics: A pure battery-less device with no energy storage capability at all and entirely dependent on the availability of an external energy source, and a device with limited energy storage capability that does not need to be manually replaced or charged.

Connectivity topologies

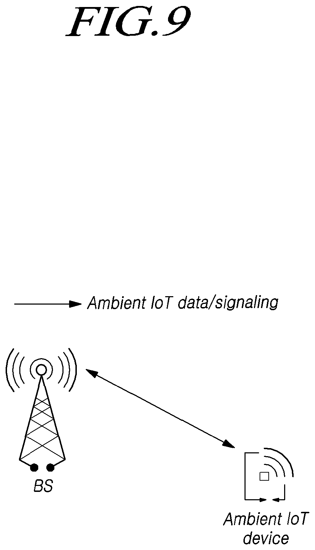

FIGS. 9 to 13 are views illustrating connectivity topology for an Ambient IoT network and device.

The following connectivity topology for an Ambient IoT network and device is defined. In all these topologies, an Ambient IoT device may receive a carrier wave from other nodes within or outside the topology. A link of each topology may be bi-directional or unidirectional.

A BS, UE, auxiliary node, or intermediate node may each be multiple BSs or UEs. Indoor/outdoor deployment mixing of these nodes is considered a network implementation choice. The potential impact on device or node complexity needs to be considered. Connectivity topology does not imply the presence of auxiliary nodes or multi-hop intermediate nodes.

Referring to FIG. 9, in topology 1, an Ambient IoT device communicates bidirectionally directly with a base station. Communication between the base station and the Ambient IoT device includes Ambient IoT data and/or signals. This topology also includes the possibility that a base station transmitting to an Ambient IoT device may be different from a base station receiving from the Ambient IoT device.

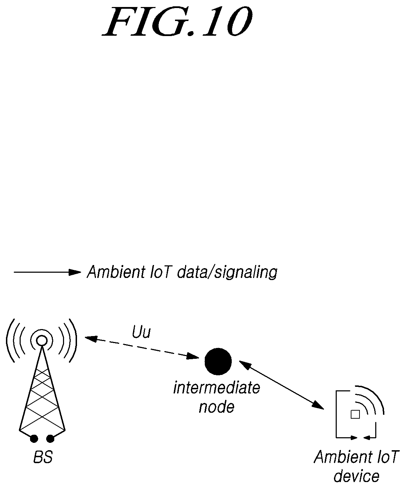

Referring to FIG. 10, in topology 2, an Ambient IoT device communicates bidirectionally with an intermediate node between the device and a base station. In this topology, the intermediate node may be a device capable of supporting Ambient IoT such as a relay, IAB node, UE, repeater, etc. The intermediate node transmits Ambient IoT data and/or signals between the base station and the Ambient IoT device.

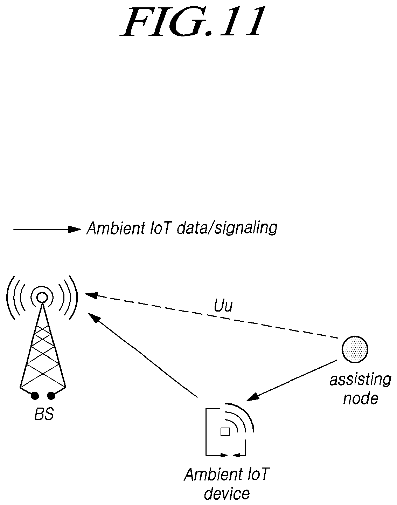

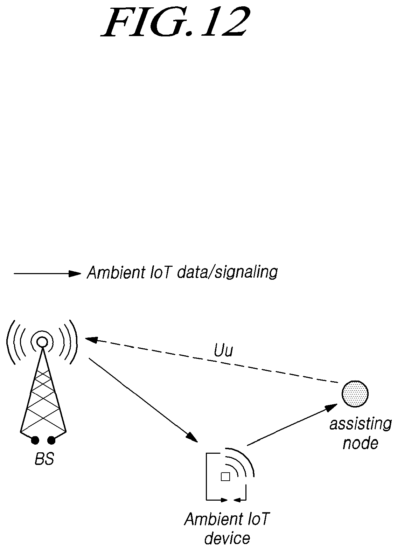

Referring to FIG. 11, in topology 3, an Ambient IoT device transmits data/signals to a base station and receives data/signals from an auxiliary node. Alternatively, referring to FIG. 12, in topology 3, an Ambient IoT device receives data/signals from a base station and transmits data/signals to an auxiliary node. In this topology, the auxiliary node may be a device capable of supporting Ambient IoT such as a relay, IAB, UE, repeater, etc.

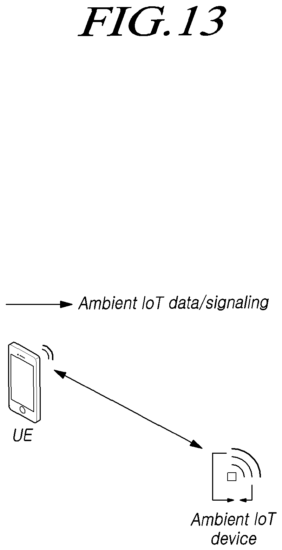

Referring to FIG. 13, in topology 4, an Ambient IoT device communicates bidirectionally with a UE. Communication between the UE and the Ambient IoT device includes Ambient IoT data and/or signals.

Deployment scenarios

Deployment scenarios are characterized such as by whether an Ambient IoT device is indoor and a base station is indoor, whether an Ambient IoT device is indoor and a base station is outdoor, whether an Ambient IoT device is indoor and there is a UE-based reader, whether an Ambient IoT device is outdoor and a base station is outdoor and, or whether an Ambient IoT device is outdoor and there is a UE-based reader.

Device categorization

In the disclosure, an Ambient IoT device is characterized according to its energy storage capacity and RF signal generation capability for transmission. A device is assumed to have at all or limited energy storage capability.

Based on this storage capacity, the disclosure considers the following set of Ambient IoT devices:

Device A: No energy storage, no independent signal generation/amplification, i.e., backscattering transmission.

Device B: With energy storage, no independent signal generation, i.e., backscattering transmission. Use of stored energy may include amplification of a reflected signal.

Device C: With energy storage, with independent signal generation, i.e., active RF components for transmission.

Limited energy storage may differ between implementations within Device B or between implementations within Device C. There may also be differences between Device B and Device C. This storage capacity is generally expected to be several times smaller than the storage capacity included in an NB-IoT device. Devices A, B, C may demodulate control, data, etc. from relevant entities of a RAN according to connectivity topology.

Device power consumption

For Device A, the power consumption target during transmitting/receiving is $\leq 1\ \mu W$ or $\leq 10\ \mu W$.

The power consumption goal of Device B is as follows:

Device A power consumption << Device B power consumption < Device C power consumption, or
Device A power consumption <= Device B power consumption < Device C power consumption.

The device power consumption during transmitting/receiving for Device C is ≤ 1 mW to ≤ 10 mW.

Device complexity

The complexity goal of Device A is set to be comparable to UHF RFID ISO18000-6C (EPC C1G2).
The goal of Device B is as follows:

$$\text{Device A complexity} < \text{Device B complexity} < \text{Device C complexity}.$$

The complexity goal of Device C is set to be several times lower than NB-IoT.

Coverage

Coverage goals for DL (downlink) and UL (uplink) are represented as maximum distance.
Distance between an Ambient IoT device and a base station in topology 1 and topology 3
Distance between an Ambient IoT device and an intermediate node or auxiliary node in topology 2 and topology 3

Distance between an Ambient IoT device and a UE in topology 4

Details related to maximum distance, such as sensitivity, BLER, transmission power, etc., should be further considered.
When a base station (BS) is present, continuous coverage is assumed from a device perspective based on typical ISD (inter-site distance) between base stations. This does not imply an assumption of a specific topology.

User experienced data rate

The user experienced data rate goal is a maximum of 5 kbps or more and a minimum of 0.1 kbps or more in uplink and downlink.

Maximum message size

The design goal of maximum message size is about 1000 bits received by an Ambient IoT device and about 1000 bits transmitted by an Ambient IoT device, based on maximum application layer packet size. TB size design may be fine-tuned as needed.

Latency

One-way end-to-end maximum latency goals are as follows:

Longer latency time goal: 10 sec
Shorter latency time goal: 1 sec

Use cases are allocated to latency goals. The latency definition suitable for one's work may be fine-tuned within the goals.
Charging time of an Ambient IoT device storage is not included in the latency defined above. Energy harvesting, charging, etc. are considered implementation issues. One-way end-to-end maximum latency is assumed to include query/trigger time as well.

Positioning accuracy

Design goals for absolute positioning accuracy performed by a cellular network (including when there is an auxiliary node) are as follows:

1~3 meters in the case of 90% at indoor locations
Tens of meters in the case of 90% at outdoor locations

Design goals for relative distance measurement accuracy for topology 4 are as follows:

1~3 meters in the case of 90% at indoor and outdoor locations
Moving speed of device

The moving speed design goal of an Ambient IoT device is at least 10 km/h in indoor scenarios, where absolute speed is used in topologies 1, 2, and 3, and relative speed is used in topology 4.

Hereinafter, a method for an Ambient IoT device to perform energy harvesting is described with reference to related drawings.

In the disclosure, an Ambient IoT device may be used with various terms such as terminal, Ambient IoT terminal, A-IoT terminal, Ambient IoT apparatus, IoT device, IoT terminal, etc. Further, a reader may be used with various terms such as reader device, base station, intermediate node, general terminal, etc., and may include a base station of the above-mentioned topology 1 or an intermediate node of topology 2, e.g., a UE. Further, a carrier wave node (CW node) is a device that transmits a carrier wave for energy harvesting and may include a base station, reader, or CW node. Further, in representing a link between a reader and an Ambient IoT device, transmission from a reader to an Ambient IoT device is referred to as R2D transmission, and conversely, transmission from an Ambient IoT device to a reader is referred to as D2R transmission. Further, a physical channel for R2D transmission is referred to as PRDCH (Physical Reader-to-Device Channel), and a physical channel for D2R transmission is referred to as PDRCH (Physical Device-to-Reader Channel). However, these terms are examples and are not limited thereto, and the technical spirit of the disclosure may be referred to by other terms as long as it may be applied substantially identically.

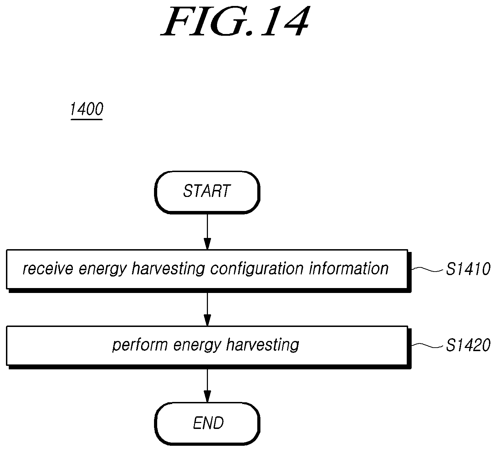

FIG. 14 is a flowchart illustrating a procedure 1400 for an Ambient IoT device to perform energy harvesting according to an embodiment.

Referring to FIG. 14, a terminal may receive configuration information for reception of a carrier wave from a carrier wave node (CW node) (S1410).

According to an example, the terminal includes an Ambient IoT device that does not have a separate power source such as a battery and has minimal energy storage capability. Since energy storage capability is limited, an Ambient IoT device needs to receive a carrier wave from a carrier wave node to perform an energy harvesting operation (e.g., power acquisition operation).

A carrier wave node may mean a device that transmits a carrier wave for energy harvesting of an Ambient IoT device. According to an example, the disclosure is described under the assumption that a carrier wave node is included inside a base station or reader, i.e., when a base station or reader also performs the role of a carrier wave node. However, when a carrier wave node is disposed outside a base station or reader, the carrier wave node may mean only a base station or reader except for an external carrier wave device that transmits a carrier wave. In this case, transmission of a carrier wave described in the disclosure is performed by an external carrier wave device, and other operations may be performed by a carrier wave node such as a base station or reader.

The terminal may receive configuration information for reception of a carrier wave from a base station or reader. According to an example, the configuration information for reception of a carrier wave may be received through higher layer signaling such as RRC signaling. Alternatively, the configuration information for reception of a carrier wave may be received through lower layer signaling such as L1/L2 signaling.

The configuration information for reception of a carrier wave may include period information for an Ambient IoT device to receive a carrier wave transmitted by a carrier wave node.

According to an example, the configuration information for reception of a carrier wave may include time resource information including slot, subframe, and frame information for receiving a carrier wave. In this case, considering a D2R slot that an Ambient IoT device transmits to a base station or reader, a time resource for reception of a carrier wave may be set by the base station or reader. According to an example, when a D2R transmission time is changed through a random number (RN) 16 included in a Query message transmitted by a base station or reader, the base station or reader may change the configuration information for reception of a carrier wave considering this. In other words, the base station or reader transmits the number of slots, subframes, and frames used to configure time resources for transmitting a carrier wave to an Ambient IoT device as the configuration information, and the Ambient IoT device may periodically receive the carrier wave in the corresponding time resource.

Alternatively, the configuration information for reception of a carrier wave may include time duration or timer setting information for receiving a carrier wave. For example, a timer such as a newly defined energy_harvesting_timer may be set, or a predetermined time duration such as 10ms every 100ms may be set.

According to an example, an Ambient IoT device may request energy harvesting from a base station or reader when the remaining battery level is insufficient and the discharge probability increases. In other words, when the remaining energy of an Ambient IoT device falls below a predetermined threshold, the Ambient IoT device may transmit an energy harvesting request message to a carrier wave node.

After transmitting the energy harvesting request message, the Ambient IoT device may enter a sleep mode in preparation for energy harvesting operation.

Referring back to FIG. 14, the terminal may perform energy harvesting by receiving a carrier wave from a CW node based on the configuration information for receiving a carrier wave (S 1420).

The Ambient IoT device may monitor a carrier wave based on the configuration information for reception of a carrier wave while in sleep mode. In other words, the Ambient IoT device may monitor and periodically receive a carrier wave in a time resource according to the number of slots, subframes, and frames included in the configuration information. Alternatively, the Ambient IoT device may monitor and periodically receive a carrier wave during a time duration according to time duration information or timer setting information for receiving a carrier wave included in the configuration information.

According to an example, an Ambient IoT device may perform energy harvesting semi-persistently based on an activation/deactivation indication message received from a carrier wave node. In other words, a base station or reader may deliver an energy harvesting activation/deactivation indication through a MAC/PHY layer as a triggering message for an Ambient IoT device to perform energy harvesting.

In this case, the Ambient IoT device may activate or deactivate a carrier wave reception operation for energy harvesting according to the received activation/deactivation indication message. In other words, when an activation indication message is received, the Ambient IoT device may perform carrier wave reception based on the configuration information for reception of a carrier wave. Thereafter, when a deactivation indication message is received, the Ambient IoT device may stop carrier wave reception.

When energy harvesting according to carrier wave reception is performed and the remaining battery level of an Ambient IoT device exceeds a predetermined threshold, the Ambient IoT device may switch to a wake-up mode. In this case, according to an example, the predetermined threshold may be set to a higher value than the predetermined threshold that serves as a criterion for transmitting the above-mentioned energy harvesting request message. In wake-up mode, R2D or D2R transmission/reception with a base station or reader may be performed.

It has been described above that carrier wave reception is performed in sleep mode, but this is an example and is not limited thereto. According to another example, carrier wave reception may also be performed in wake-up mode in which R2D or D2R communication is being performed without switching to sleep mode.

According to the embodiments described above, energy harvesting may be performed.

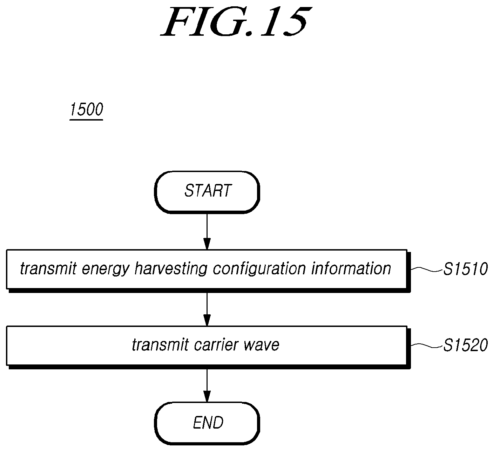

FIG. 15 is a flowchart illustrating a procedure 1500 for a carrier wave node to control energy harvesting of an Ambient IoT device according to an embodiment. The description above in FIG. 14 may be omitted to avoid redundant description, and in this case, the omitted content may be applied substantially identically to a carrier wave node as long as it does not contradict the technical spirit of the disclosure.

Referring to FIG. 15, a carrier wave node may transmit configuration information for transmission of a carrier wave to an Ambient IoT device (S1510).

A base station or reader may transmit configuration information for transmission of a carrier wave to an Ambient IoT device. According to an example, the configuration information for transmission of a carrier wave may be transmitted through higher layer signaling such as RRC signaling. Alternatively, the configuration information for transmission of a carrier wave may be transmitted through L1/L2 signaling.

The configuration information for transmission of a carrier wave may include period information for a carrier wave node to transmit a carrier wave to an Ambient IoT device.

According to an example, the configuration information for transmission of a carrier wave may include time resource information including slot, subframe, and frame information for transmitting a carrier wave. In this case, considering a D2R slot that an Ambient IoT device transmits to a base station or reader, the base station or reader may set a time resource for transmission of a carrier wave. According to an example, when a D2R transmission time is changed through a random number (RN) 16 included in a Query message transmitted by a base station or reader, the base station or reader may change the configuration information for transmission of a carrier wave considering this. In other words, the base station or reader may transmit the number of slots, subframes, and frames to transmit a carrier wave to an Ambient IoT device as the configuration information, and the Ambient IoT device may periodically receive the carrier wave in the corresponding time resource.

Alternatively, the configuration information for transmission of a carrier wave may include time duration or timer setting information for transmitting a carrier wave. For example, a new timer such as energy_harvesting_timer may be set, or a predetermined time duration such as 10ms every 100ms may be set.

According to an example, an Ambient IoT device may request energy harvesting from a base station or reader when the remaining battery level is insufficient and the discharge probability increases. In other words, when the remaining energy of an Ambient IoT device falls below a predetermined threshold, a carrier wave node may receive an energy harvesting request message from the Ambient IoT device.

After transmitting the energy harvesting request message, the Ambient IoT device may switch to a sleep mode that prepares to perform energy harvesting.

Referring back to FIG. 15, a carrier wave node may transmit a carrier wave to an Ambient IoT device based on the configuration information for transmission of a carrier wave (S1520).

The Ambient IoT device may monitor a carrier wave based on the configuration information for reception of a carrier wave in sleep mode. In other words, the carrier wave node may periodically transmit a carrier wave within a time resource according to the number of slots, subframes, and frames included in the configuration information. Alternatively, the carrier wave node may periodically transmit a carrier wave during a time duration according to time duration information or timer setting information for transmitting a carrier wave included in the configuration information.

According to an example, a carrier wave node may enable an Ambient IoT device to perform energy harvesting semi-persistently based on an activation/deactivation indication message. In other words, a base station or reader may deliver an energy harvesting activation/deactivation indication through a MAC/PHY layer as a triggering message for an Ambient IoT device to perform energy harvesting.

In this case, the Ambient IoT device may activate or deactivate a carrier wave reception operation for energy harvesting according to the received activation/deactivation indication message. In other words, when an activation indication message is received, the Ambient IoT device may perform carrier wave reception based on the configuration information for reception of a carrier wave. Thereafter, when a deactivation indication message is received, the Ambient IoT device may stop carrier wave reception.

When energy harvesting according to carrier wave reception is performed and the remaining battery level of an Ambient IoT device exceeds a predetermined threshold, the Ambient IoT device may switch to a wake-up mode. In this case, according to an example, the predetermined threshold may be set to a higher value than the predetermined threshold that serves as a criterion for transmitting the above-mentioned energy harvesting request message. In wake-up mode of the Ambient IoT device, the base station or reader may perform R2D or D2R transmission/reception with the Ambient IoT device.

It has been described above that carrier wave reception is performed in sleep mode of an Ambient IoT device, but this is an example and is not limited thereto. According to another example, carrier wave reception may also be performed in wake-up mode where R2D or D2R communication is being performed without switching to sleep mode.

According to the embodiments described above, energy harvesting may be performed.

Hereinafter, more embodiments related to a method for performing energy harvesting are described in detail with reference to related drawings.

Ambient IoT devices are expected to be classified into two types and studied as illustrated in Table 2 below.

[Table 2]

|  | Device Type | Energy Storage | Peak Power Consumption | Independent signal generation | Amplification | UL Tx method (Backscattering: carrier wave from externally) | Initial SFO (Sampling Frequency Offset) |
|---|---|---|---|---|---|---|---|
| Passive | Device X | Yes | ~1 μW | No | No (DL/UL) | Backscattering | up to $10^X$ ppm |
| Active | Device Y | Yes | ≤ a few hundred μW | Yes (UL) | Yes (DL/UL) | Backscattering of Active RF Components | up to $10^X$ ppm |

Device X (an arbitrary name, not limited thereto) has a maximum power consumption of 1 μW or less and has no independent signal generation and amplification function. Further, uplink (UL) is transmitted using backscattering of a carrier wave provided externally. Device Y (an arbitrary name, not limited thereto) has a maximum power consumption of several hundred μW or less and supports independent signal generation and amplification functions. Further, UL may be transmitted using backscattering of a carrier wave provided externally or may be transmitted through signal generation inside the terminal itself.

A common feature of the Devices X and Y under discussion is that they have energy storage. However, Devices X and Y may have limited energy storage. The limited energy storage refers to a storage device composed of a small-sized capacitor. Therefore, an energy harvesting operation is necessary to support seamless communication of an Ambient IoT Device. Ambient IoT technology has emphasized the necessity for energy harvesting, but detailed operations for supporting it have not been defined.

For energy harvesting of an Ambient IoT device, three options for a wake-up/sleep scheme to determine availability/unavailability of an Ambient IoT device have been discussed as follows. For energy harvesting of Ambient IoT device (A-IoT device), an A-IoT device needs duty-cycle operation, and time duration for ON/active mode and OFF/sleep mode is needed. Each scheme below is divided by transition criteria or standards for wake-up and sleep modes for an A-IoT device to determine whether to perform energy harvesting. The wake-up/sleep criteria consider the battery charging degree of an A-IoT device, ON/OFF time duration, wake-up/sleep indication from a base station, and other options may also be considered.

IoT device wake-up/sleep scheme 1: A fully or partially charged A-IoT device wakes up based on RF power exceeding an activation threshold and sleeps when fully discharged.

IoT device wake-up/sleep scheme 2: An A-IoT device wakes up when fully charged or partially charged to a predetermined level and RF power exceeds an activation threshold, and sleeps after maintaining an ON state for a predetermined time duration or sleeps in a partially discharged state (e.g., when partially discharged).

IoT device wake-up/sleep scheme 3: An A-IoT device may wake up and sleep according to an instruction provided by a reader.

However, when an A-IoT device performs energy harvesting, when and how to receive a charging signal from a base station/Reader has not been discussed so far. Therefore, the disclosure provides a method for supporting energy harvesting of an Ambient IoT Device through a network and base station.

The purpose of the disclosure is to provide seamless communication by reducing outage probability by a base station/Reader supporting periodic or semi-persistent energy harvesting operation to an Ambient IoT device having energy harvesting capability. The disclosure proposes a procedure for a base station/Reader to allocate an energy harvesting-dedicated carrier wave to (n+1) slot/subframe/frame resources or transmit a carrier wave for a predetermined time interval (timer or time duration) and periodically transmit to an Ambient IoT device, thereby reducing the battery discharge probability of an A-IoT device and enabling the device to maintain communication for a longer time.

The disclosure proposes resource allocation and transmission/reception procedures for a base station/Reader to transmit a carrier wave for energy harvesting to an A-IoT device periodically or semi-persistently for an A-IoT Device having energy harvesting capabilities.

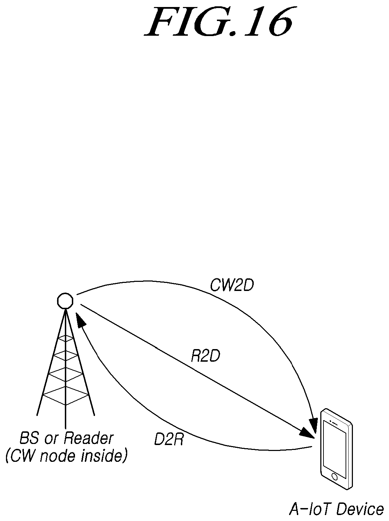

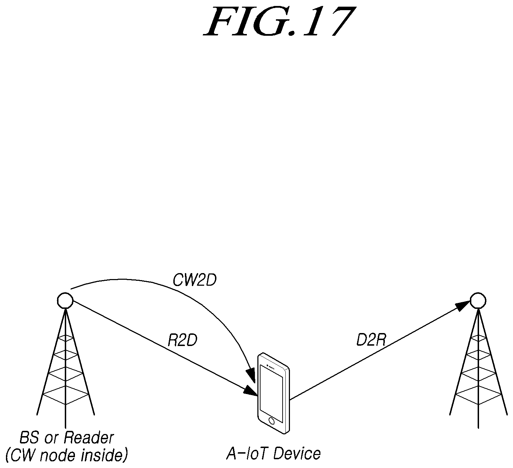

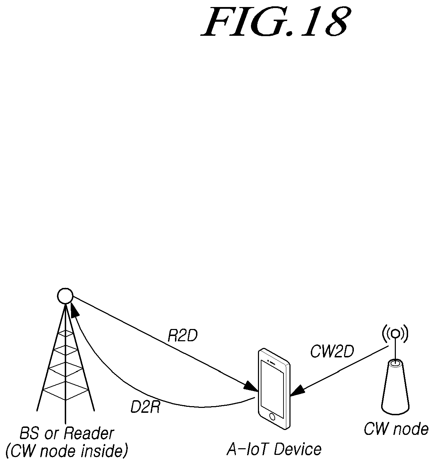

Prior to the description, the disclosure, as illustrated in FIGS. 16 to 18, a carrier wave node (CW node), which is an entity capable of transmitting a carrier wave, may be positioned inside a base station or Reader and may also be positioned outside. The operation of the disclosure is applicable to inside/outside topology and scenarios of a CW node in Topology 1 and 2 of the above-mentioned TR 38.848. FIGS. 16 to 18 illustrate only some of the A-IoT/CW node topology and scenarios applicable in the disclosure. In other words, embodiments of the disclosure are applicable to all scenarios where a CW node is present among topology/deployment scenarios related to A-IoT.

In the disclosure, a base station/Reader/CW node (as mentioned above, in the disclosure, a device that performs a carrier wave is uniformly referred to as a "CW node") transmits a carrier wave for energy harvesting to an A-IoT device periodically in a cell-specific manner. This is a method for a network to configure and transmit a carrier wave to A-IoT like a cell-specific reference signal such as CSI-RS/SRS configuration of 5G NR. Alternatively, it means a method of configuring a carrier wave and periodically transmitting to A-IoT like sending 5G NR SSB.

Therefore, an A-IoT Device should receive period information for receiving a carrier wave transmitted by the CW node, and for this, a base station and Reader provide configuration information related to the number (period) of carrier wave allocation slots, subframes, and frames for periodic energy harvesting to A-IoT Devices. The configuration information may include new time duration information for an A-IoT device to perform energy harvesting]

As described above, the disclosure proposes an energy harvesting procedure of an A-IoT Device through a new carrier wave configuration method and transmission. First, a base station or Reader sets a carrier wave transmission period and provides configuration including the information to an A-IoT Device. The configuration includes information on how many slot/subframe/frame periods a carrier wave is transmitted. Alternatively, a timer and time duration for receiving a carrier wave may be included. An A-IoT Device that receives the information performs carrier wave monitoring according to the setting information and performs energy harvesting periodically. As a triggering message for an A-IoT Device to perform energy harvesting, a base station or Reader may deliver an energy harvesting activation/deactivation indication through a MAC/PHY layer.

- Option 1. Periodic energy harvesting operation

A base station/Reader provides the number of slots/subframes/frames to transmit a carrier wave to an A-IoT Device as setting information, and the A-IoT Device periodically receives a carrier wave in the corresponding period.

- Option 2. Semi-persistence energy harvesting operation

A base station/Reader provides Energy harvesting Activation/Deactivation Indication information to an A-IoT Device. An A-IoT Device changes its operation to receive or not receive a carrier wave for energy harvesting only when receiving this.

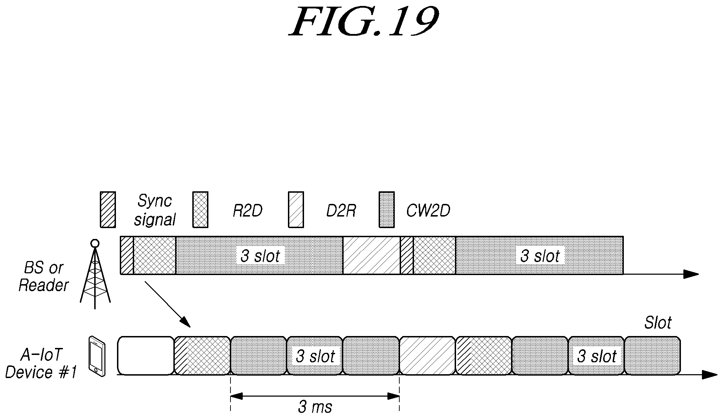

FIG. 19 is a view illustrating a configuration of a carrier wave according to an embodiment. FIG. 19 illustrates an example of a carrier wave configuration method and energy harvesting operation of an A-IoT Device proposed in the disclosure. Further, terminal and base station operations for the embodiment are as follows.

[UE operations]

1. An A-IoT device receives energy harvesting setting information that includes at least the following information from a base station/Reader.

- Opt. 1. Number of slots/subframes/frames to receive a carrier wave
- Opt. 2. Carrier wave reception time duration or timer information

  • Ex) New timer (energy_harvesting_timer) or time duration (10ms every 100ms)
  • For triggering the energy harvesting, an A-IoT Device may receive an energy harvesting activation/deactivation indication message from a base station/Reader. The indication message may be received through a newly defined MAC CE or PHY (L1) layer.

2. An A-IoT device periodically monitors and receives a carrier wave based on the setting information.

- By newly defining a PHY layer or MAC CE, the information may be delivered to an A-IoT device.

  • In this case, a base station/Reader may activate/deactivate energy harvesting of an A-IoT device by providing an energy harvesting activation/deactivation indication to the A-IoT device. The indication information may be triggered based on battery remaining information that an A-IoT device periodically reports.

3. When the remaining battery level of an A-IoT device is insufficient and the outage probability increases, it may transmit an energy harvesting request to a base station/Reader.

- When the remaining battery level of an A-IoT device falls below a threshold, the request message is triggered and delivered to a base station/reader.
- After transmitting the request message, an A-IoT device switches to sleep mode to prepare for carrier wave reception and, when the remaining battery level exceeds the threshold, it wakes up again to prepare for R2D/D2R transmission/reception.

[Base station operations]

1. A base station/Reader configures carrier wave setting information to transmit.

- Opt. 1. Number of slots/subframes/frames of a carrier wave to transmit to an A-IoT Device

  • In this case, a base station/Reader may set a transmission period of a carrier wave considering a D2R slot that an A-IoT device transmits to a Reader. A D2R transmission time may be changed through a random number (RN) 16 included in a Query message transmitted by a reader and, when changed, the base station may change carrier wave transmission setting information considering this.

- Opt. 2. Carrier wave transmission/reception time duration or timer information to transmit to an A-IoT Device

  • Ex) New timer (energy_harvesting_timer) or time duration (10ms every 100ms)

2. A base station/Reader transmits the setting information to an A-IoT Device through the following.

- By newly defining a PHY layer or MAC CE, the information may be delivered to an A-IoT device.

- In this case, a base station/Reader may activate/deactivate energy harvesting of an A-IoT device by providing an energy harvesting activation/deactivation indication to the A-IoT device. The indication information may be triggered based on battery remaining information that an A-IoT device periodically reports.

3. A carrier wave node transmits a carrier wave to an A-IoT device based on the setting information.

According to this, seamless communication may be provided by reducing discharge probability based on periodic carrier wave reception of an Ambient IoT device supporting energy harvesting operating in low power.

With regard to the above-described embodiments, each embodiment is included in the scope of the disclosure, not only individually, but also as all examples constituted of a combination of embodiments.

Configurations of a terminal and a carrier wave node which may perform all or some of the embodiments described above in connection with FIGS. 1 to 19 are described below with reference to the drawings. The above description may be omitted to avoid redundant description. In such case, the omitted content may be applied in substantially the same manner to the following description as long as it does not go against the technical spirit of the disclosure.

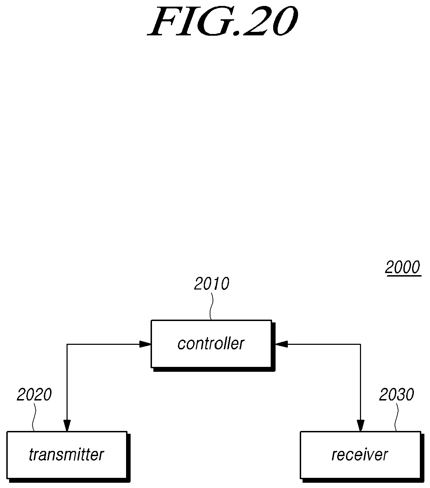

FIG. 20 is a block diagram illustrating a UE 2000 according to an embodiment.

Referring to FIG. 20, a UE 2000 according to an embodiment includes a transmitter 2020, a receiver 2030, and a controller 2010 controlling operations of the transmitter and the receiver.

A controller 2010 controls the overall operation of a terminal 2000 for performing energy harvesting according to the embodiments described above.

The controller 2010 may receive configuration information for receiving a carrier wave from a carrier wave node (CW node). In other words, the controller 2010 may receive the configuration information from a base station or reader. According to an example, the configuration information for receiving a carrier wave may be received through higher layer signaling such as RRC signaling. Alternatively, according to another example, the configuration information for receiving a carrier wave may be received through L1/L2 signaling.

The configuration information for receiving a carrier wave may include period information for an Ambient IoT device to receive a carrier wave transmitted by a carrier wave node.

According to an example, the configuration information for receiving a carrier wave may include time resource information including slot, subframe, and frame information for receiving a carrier wave. In this case, considering a D2R slot that an Ambient IoT device transmits to a base station or reader, a time resource for reception of a carrier wave may be set by the base station or reader. According to an example, when a D2R transmission time is changed through a random number (RN) 16 included in a Query message transmitted by a base station or reader, the base station or reader may change the configuration information for reception of a carrier wave considering this. In other words, the base station or reader transmits the number of slots, subframes, and frames to transmit a carrier wave to an Ambient IoT device as the configuration information, and the controller 2010 may periodically receive the carrier wave in the corresponding time resource.

Alternatively, the configuration information for reception of a carrier wave may include time duration or timer setting information for receiving a carrier wave. For example, a new timer such as energy_harvesting_timer may be set, or a predetermined time duration such as 10ms every 100ms may be set.

According to an example, the controller 2010 may request energy harvesting from a base station or reader when the remaining battery level is insufficient and the discharge probability increases. In other words, when the remaining remaining of an Ambient IoT device falls below a predetermined threshold, the controller 2010 may transmit an energy harvesting request message to a carrier wave node.

After transmitting the energy harvesting request message, the controller 2010 may switch to a sleep mode that prepares to perform energy harvesting.

The controller 2010 may perform energy harvesting by receiving a carrier wave from a CW node based on the configuration information for reception of a carrier wave. The controller 2010 may monitor a carrier wave based on the configuration information for reception of a carrier wave in sleep mode. In other words, the controller 2010 may monitor and periodically receive a carrier wave in a time resource according to the number of slots, subframes, and frames included in the configuration information. Alternatively, the controller 2010 may monitor and periodically receive a carrier wave during a time duration according to time duration information or timer setting information for receiving a carrier wave included in the configuration information.

According to an example, the controller 2010 may perform energy harvesting semi-persistently based on an activation/deactivation indication message received from a carrier wave node. In other words, a base station or reader may deliver an energy harvesting activation/deactivation indication through a MAC/PHY layer as a triggering message for an Ambient IoT device to perform energy harvesting.

In this case, the controller 2010 may activate or deactivate a carrier wave reception operation for energy harvesting according to the received activation/deactivation indication message. In other words, when an activation indication message is received, the controller 2010 may perform carrier wave reception based on the configuration information for reception of a carrier wave. Thereafter, when a deactivation indication message is received, the controller 2010 may stop carrier wave reception.

When energy harvesting according to carrier wave reception is performed and the remaining battery level of an Ambient IoT device exceeds a predetermined threshold, the controller 2010 may switch to a wake-up mode. In this case, according to an example, the predetermined threshold may be set to a higher value than the predetermined threshold that serves as a criterion for transmitting the above-mentioned energy harvesting request message. In wake-up mode, the controller 2010 may perform R2D or D2R transmission/reception with a base station or reader.

It has been described above that carrier wave reception is performed in sleep mode, but this is an example and is not limited thereto. According to another example, carrier wave reception may also be performed in wake-up mode in which R2D or D2R communication is being performed without switching to sleep mode.

According to the embodiments described above, energy harvesting may be performed.

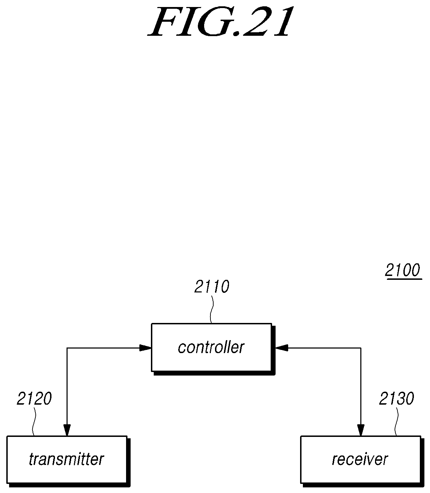

FIG. 21 is a block diagram illustrating a carrier wave node 2100 according to another embodiment.

Referring to FIG. 21, a carrier wave node 2100 according to an embodiment includes a transmitter 2120, a receiver 2130, and a controller 2110 that controls operations of the transmitter and receiver.

The controller 2110 controls the overall operation of the carrier wave node 2100 for performing energy harvesting according to the embodiments described above. The transmitter 2120 transmits downlink control information and data or messages to the UE via a corresponding channel. The receiver 2130 receives uplink control information and data or messages from the UE via a corresponding channel.

The controller 2110 may transmit configuration information for transmission of a carrier wave to an Ambient IoT device. According to an example, the controller 2110 is a controller of a base station or reader and may transmit configuration information for transmission of a carrier wave to an Ambient IoT device. According to an example, the configuration information for transmission of a carrier wave may be transmitted through higher layer signaling such as RRC signaling. Alternatively, according to another example, the configuration information for transmission of a carrier wave may be transmitted through L1/L2 signaling.

The configuration information for transmission of a carrier wave may include period information for a carrier wave node to transmit a carrier wave to an Ambient IoT device.

According to an example, the configuration information for transmission of a carrier wave may include time resource information including slot, subframe, and frame information for transmitting a carrier wave. In this case, considering a D2R slot that an Ambient IoT device transmits to a base station or reader, the controller 2110 may set a time resource for transmission of a carrier wave. According to an example, when a D2R transmission time is changed through a random number (RN) 16 included in a Query message transmitted by the controller 2110, the controller 2110 may change the configuration information for transmission of a carrier wave considering this. In other words, the controller 2110 transmits the number of slots, subframes, and frames to transmit a carrier wave to an Ambient IoT device as the configuration information, and the Ambient IoT device may periodically receive the carrier wave in the corresponding time resource.

Alternatively, the configuration information for transmission of a carrier wave may include time duration or timer setting information for transmitting a carrier wave. For example, a new timer such as energy_harvesting_timer may be set, or a predetermined time duration such as 10ms every 100ms may be set.

According to an example, an Ambient IoT device may request energy harvesting from a base station or reader when the remaining battery level is insufficient and the discharge probability increases. In other words, when the remaining energy of an Ambient IoT device falls below a predetermined threshold, the controller 2110 may receive an energy harvesting request message from the Ambient IoT device.

After transmitting the energy harvesting request message, the Ambient IoT device may switch to a sleep mode that prepares to perform energy harvesting.

The controller 2110 may transmit a carrier wave to an Ambient IoT device based on the configuration information for transmission of a carrier wave.

The Ambient IoT device may monitor a carrier wave based on the configuration information for reception of a carrier wave in sleep mode. In other words, the controller 2110 may periodically transmit a carrier wave within a time resource according to the number of slots, subframes, and frames included in the configuration information. Alternatively, the controller 2110 may periodically transmit a carrier wave during a time duration according to time duration information or timer setting information for transmitting a carrier wave included in the configuration information.

According to an example, the controller 2110 may enable an Ambient IoT device to perform energy harvesting semi-persistently based on an activation/deactivation indication message. In other words, the controller 2110 may deliver an energy harvesting activation/deactivation indication through a MAC/PHY layer as a triggering message for an Ambient IoT device to perform energy harvesting.

In this case, the Ambient IoT device may activate or deactivate a carrier wave reception operation for energy harvesting according to the received activation/deactivation indication message. In other words, when an activation indication message is received, the Ambient IoT device may perform carrier wave reception based on the configuration information for reception of a carrier wave. Thereafter, when a deactivation indication message is received, the Ambient IoT device may stop carrier wave reception.

When energy harvesting according to carrier wave reception is performed and the remaining battery level of an Ambient IoT device exceeds a predetermined threshold, the Ambient IoT device may switch to a wake-up mode. In this case, according to an example, the predetermined threshold may be set to a higher value than the predetermined threshold that serves as a criterion for transmitting the above-mentioned energy harvesting request message. In wake-up mode of the Ambient IoT device, the controller 2110 may perform R2D or D2R transmission/reception with the Ambient IoT device.

It has been described above that carrier wave reception is performed in sleep mode of an Ambient IoT device, but this is an example and is not limited thereto. According to another example, carrier wave reception may also be performed in wake-up mode where R2D or D2R communication is being performed without switching to sleep mode.

According to the embodiments described above, energy harvesting may be performed.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

**Claims**

1.  A method for an Ambient Internet of things (IoT) device to perform energy harvesting, the method comprising:

    receiving, from a carrier wave node (CW node), configuration information for receiving a carrier wave; and
    receiving the carrier wave from the CW node based on the configuration information to perform energy harvesting.

2.  The method of claim 1, wherein the configuration information includes i) time resource information including slot, subframe, and frame information for receiving the carrier wave, or ii) time interval information or timer setting information for receiving the carrier wave.

3.  The method of claim 1, wherein the performing of the energy harvesting is performed based on an activation/deactivation indication message received from the CW node.

4. The method of claim 1, further comprising transmitting an energy harvesting request message to the CW node when a remaining energy level of the Ambient IoT device falls below a predetermined threshold.

5. The method of claim 4, further comprising switching to a sleep mode for preparing to perform the energy harvesting after transmitting the energy harvesting request message.

6. A method for a carrier wave node (CW node) to control energy harvesting of an Ambient Internet of things (IoT) device, the method comprising:

   transmitting configuration information for transmitting a carrier wave to the Ambient IoT device; and
   transmitting the carrier wave to the Ambient IoT device based on the configuration information.

7. The method of claim 6, wherein the configuration information includes i) time resource information including slot, subframe, and frame information for transmitting the carrier wave, or ii) time interval or timer setting information for transmitting the carrier wave.

8. The method of claim 6, wherein the transmitting of the carrier wave is performed based on an activation/deactivation indication message transmitted from the CW node.

9. The method of claim 6, further comprising receiving an energy harvesting request message from the Ambient IoT device when a remaining energy level of the Ambient IoT device falls below a predetermined threshold.

10. An Ambient Internet of things (IoT) device that performs energy harvesting, comprising:

    a transmitter;
    a receiver; and
    a controller controlling an operation of the transmitter and the receiver,
    wherein the controller receives, from a carrier wave node (CW node), configuration information for receiving a carrier wave, and receives the carrier wave from the CW node based on the configuration information to perform energy harvesting.

11. The Ambient IoT device of claim 10, wherein the configuration information includes i) time resource information including slot, subframe, and frame information for receiving the carrier wave, or ii) time interval or timer setting information for receiving the carrier wave.

12. The Ambient IoT device of claim 10, wherein the controller performs the energy harvesting based on an activation/deactivation indication message received from the CW node.

13. The Ambient IoT device of claim 10, wherein the controller transmits an energy harvesting request message to the CW node when a remaining energy level of the Ambient IoT device falls below a predetermined threshold.

14. The Ambient IoT device of claim 13, wherein the controller switches to a sleep mode for preparing to perform the energy harvesting after transmitting the energy harvesting request message.

# FIG.1

FIG.2

# FIG.3

One subframe

Carrier bandwidth

Resource grid, 2deltaf

Resource grid, deltaf

One resource block–12 subcarriers, subcarrier spacing 2deltaf

One resource block–12 subcarriers, subcarrier spacing 2deltaf

EP 4 687 266 A1

# FIG.4

Carrier (w. RF requirements)

BWP#1 active

BWP#2 active

BWP#1 active

BWP#1

BWP#2

frequency

time

Switch of active bandwidth part

# *FIG.5*

# *FIG.6*

TERMINAL(UE)                    BASE STATION(gNB)

Preamble(PRACH)

RA  Response(RAR)

"Message 3"

Collision
resolution          "Message 4"

# FIG.7

*one slot*

# *FIG.8*

**Reader**

**Tag**

| Select |
| --- |

↓

| Inventory |
| --- |

↓

| Access |
| --- |

↔

| State |
| --- |
| Ready |
| Arbitrate |
| Reply |
| Acknowledge |
| Open |
| Secured |
| Killed |

# *FIG.9*

⟶ *Ambient IoT data/signaling*

*BS*

*Ambient IoT device*

# FIG.10

→ Ambient IoT data/signaling

BS

Uu

intermediate
node

Ambient IoT
device

# FIG.11

───────► Ambient IoT data/signaling

Uu

assisting
node

BS

Ambient IoT
device

# FIG.12

→ Ambient IoT data/signaling

Uu

BS

Ambient IoT
device

assisting
node

# FIG.13

→ Ambient IoT data/signaling

UE

Ambient IoT
device

# FIG.14

1400

```
        ┌──────────┐
        │  START   │
        └──────────┘
             │
             ▼
┌─────────────────────────────────────────────┐
│ receive energy harvesting configuration      │ ～S1410
│ information                                   │
└─────────────────────────────────────────────┘
             │
             ▼
┌─────────────────────────────────────────────┐
│         perform energy harvesting            │ ～S1420
└─────────────────────────────────────────────┘
             │
             ▼
        ┌──────────┐
        │   END    │
        └──────────┘
```

# FIG.15

_1500_

```
            ┌─────────────┐
            │    START    │
            └──────┬──────┘
                   │
                   ▼
┌──────────────────────────────────────────────┐
│ transmit energy harvesting configuration      │────S1510
│ information                                    │
└──────────────────┬─────────────────────────────┘
                   │
                   ▼
┌──────────────────────────────────────────────┐
│           transmit carrier wave               │────S1520
└──────────────────┬─────────────────────────────┘
                   │
                   ▼
            ┌─────────────┐
            │     END     │
            └─────────────┘
```

# FIG.16

CW2D

R2D

D2R

BS or Reader
(CW node inside)

A-IoT Device

# FIG.17

CW2D

R2D

D2R

BS or Reader
(CW node inside)

A-IoT Device

# *FIG.18*

R2D

CW2D

D2R

BS or Reader
(CW node inside)

A-IoT Device

CW node

# FIG.19

EP 4 687 266 A1

# FIG.20

2000

2010

controller

2020

transmitter

2030

receiver

# *FIG.21*

2100

2110

controller

2120

transmitter

2130

receiver

Europäisches Patentamt
European Patent Office
Office européen des brevets

# EUROPEAN SEARCH REPORT

**Application Number**

EP 25 19 3140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/352751 A1 (ELSHAFIE AHMED [US] ET AL) 3 November 2022 (2022-11-03) * paragraphs [0004], [0067], [0077], [0092] - [0157]; figures 1-12 * ----- | 1-14 | INV. H02J50/20 H02J50/40 H02J50/80 H02J50/00 H04W4/70 H04W52/02 |
| X | WO 2023/224782 A1 (QUALCOMM INC [US]) 23 November 2023 (2023-11-23) * paragraphs [0106] - [0145]; figures 1-4 * ----- | 1-4,6-13 | |

**TECHNICAL FIELDS SEARCHED (IPC)**

H02J

The present search report has been drawn up for all claims

| Place of search | Date of completion of the search | Examiner |
|---|---|---|
| Munich | 5 November 2025 | Telega, Pawel |

EPO FORM 1503 03.82 (P04C01)

## ANNEX TO THE EUROPEAN SEARCH REPORT
## ON EUROPEAN PATENT APPLICATION NO.

EP 25 19 3140

This annex lists the patent family members relating to the patent documents cited in  the above-mentioned European search report.
The members are as contained in the European Patent Office EDP file on
The European Patent Office is in no way liable for these particulars which are merely given for the purpose of information.

05-11-2025

| Patent document cited in search report | | Publication date | Patent family member(s) | | Publication date |
|---|---|---|---|---|---|
| US 2022352751 | A1 | 03-11-2022 | NONE | | |
| WO 2023224782 | A1 | 23-11-2023 | CN | 119174086 A | 20-12-2024 |
| | | | EP | 4526977 A1 | 26-03-2025 |
| | | | US | 2023378807 A1 | 23-11-2023 |
| | | | WO | 2023224782 A1 | 23-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240102183
- KR 1020250098187